# EUROPÄISCHE PATENTSCHRIFT

(11) **EP 3 084 367 B1**
(45) Veröffentlichungstag und Bekanntmachung des Hinweises auf die Patenterteilung: **14.10.2020**
(21) Anmeldenummer: 14802378.1
(22) Anmeldetag: 17.11.2014
(51) Int. Cl.: G01F 1/84, G01N 9/00, G01N 11/16, H01F 5/02, H01F 5/04, H01F 27/06

(54) **SPULE**
COIL
BOBINE

(30) Priorität: 20.12.2013 DE 102013114731; 25.03.2014 DE 102014104095
(43) Veröffentlichungstag der Anmeldung: 26.10.2016
(73) Patentinhaber: Endress+Hauser Flowtec AG, 4153 Reinach (BL) (CH)
(72) Erfinder: BITTO, Ennio, CH-4147 Aesch (CH); ECKERT, Gerhard, 79639 Grenzach-Wyhlen (DE)
(74) Vertreter: Andres, Angelika Maria
(86) Internationale Anmeldenummer: PCT/EP2014/074712
(87) Internationale Veröffentlichungsnummer: WO 2015/090776

(56) Entgegenhaltungen:
- WO-A1-91/01907
- DE-A1- 1 935 366
- DE-A1- 3 629 006
- DE-B1- 1 590 595
- FR-A1- 2 172 901
- GB-A- 2 221 098
- US-A- 5 429 002
- US-B1- 6 362 717

## Beschreibung

Die Erfindung betrifft eine, insb. für die Verwendung in einen Meßwandler vom Vibrationstyp, nicht zuletzt auch zur Bildung eines Schwingungserregers und/oder eines Schwingungssensors geeignete, Spule. Ferner betrifft die Erfindung einen eine solche Spule aufweisenden Meßwandler vom Vibrationstyp.

In der industriellen Meßtechnik werden, insb. auch im Zusammenhang mit der Regelung und Überwachung von automatisierten verfahrenstechnischen Prozessen, zur hochgenauen Ermittlung einer oder mehrerer Meßgrößen, insb. einer Massendurchflußrate, einer Dichte und/oder einer Viskosität, einer in einer Prozeßleitung, beispielsweise einer Rohrleitung, strömenden Mediums, beispielsweise einer Flüssigkeiten oder eines Gases, oftmals jeweils mittels einer - zumeist mittels wenigstens einen Mikroprozessors gebildeten - Meßgerät-Elektronik sowie einem mit nämlicher Meßgerät-Elektronik elektrisch verbundenen, im Betrieb vom zu messenden Medium durchströmten Meßwandler vom Vibrationstyp gebildete vibronische Meßgeräte verwendet. Solche - beispielsweise als sogenannte Vierleiter- oder auch als sogenannte Zweileitergeräte ausgebildete - Meßgeräte sind seit langem bekannt, nicht zuletzt auch ingestalt von Coriolis-Massendurchfluß-/Dichte-Meßgeräten oder auch ingestalt von Viskositäts-Dichte-Meßgeräten, und im industriellen Einsatz etabliert. Beispiele für solche vibronischen Meßgeräte bzw. dafür geeignete Meßwandler sind u.a. in der US-A 2004/0123645, der US-A 2006/0096390, der US-A 2007/0062309, der US-A 2007/0119264, der US-A 2008/0047362, der US-A 2008/0190195, der US-A 2008/0250871, der US-A 2010/0005887, der US-A 2010/0011882, der US-A 2010/0257943, der US-A 2011/0161017, der US-A 2011/0219872, der US-A 2011/0265580, der US-A 2012/0123705, der US-A 2013/0042700, der US-A 44 91 009, der US-A 45 24 610, der US-A 47 56 198, der US-A 47 77 833, der US-A 48 01 897, der US-A 48 76 898, der US-A 49 96 871, der US-A 52 87 754, der US-A 52 91 792, der US-A 53 49 872, der US-A 55 31 126, der US-A 57 05 754, der US-A 57 96 010, der US-A 57 96 011, der US-A 58 31 178, der US-A 59 45 609, der US-A 59 65 824, der US-A 60 06 609, der US-A 60 92 429, der US-B 62 23 605, der US-B 63 11 136, der US-B 64 77 901, der US-B 65 13 393, der US-B 66 51 513, der US-B 66 66 098, der US-B 67 11 958, der US-B 68 40 109, der US-B 69 20 798, der US-B 70 17 424, der US-B 70 77 014, der US-B 72 00 503, der US-B 72 16 549, der US-B 73 25 462, der US-B 73 60 451, der US-B 77 92 646, der WO-A 00/34748, der WO-A 01/02 816, der WO-A 2007/043996, der WO-A 2008/059262, der WO-A 2013/092104, der WO-A 85/05677, der WO-A 88/02853, der WO-A 89/00679, der WO-A 94/21999, der WO-A 95/03528, der WO-A 95/16897, der WO-A 95/29385, der WO-A 98/02725, oder der WO-A 99/40 394 beschrieben.

Die DE 15 90 595 B1 beschreibt eine Spule gemäß dem Oberbegriff des vorliegenden unabhängigen Patentanspruchs 1, welche geeignet ist für einen Meßwandler vom Vibrationstyp.

Der Meßwandler eines jeden der darin gezeigten Meßgeräte umfaßt wenigstens ein zumindest abschnittsweise gerades und/oder zumindest abschnittsweise gekrümmtes, z.B. U-, V-, S-, Z- oder Ω-artig geformtes, Meßrohr mit einem von einer Rohrwand umgebenen Lumen zum Führen des Mediums.

Das wenigstens eine Meßrohr eines solchen Meßwandlers ist dafür eingerichtet, im Lumen Medium zu führen und währenddessen so vibrieren gelassen zu werden, daß es Nutzschwingungen, nämlich mechanische Schwingungen um eine Ruhelage mit einer auch von der Dichte des Mediums mitbestimmten, mithin als Maß für die Dichte verwendbaren Nutzfrequenz ausführt. Bei herkömmlichen vibronischen Meßgeräten dienen typischerweise Biegeschwingungen auf einer natürlichen Resonanzfrequenz als Nutzschwingungen, beispielsweise solche Biegeschwingungen, die einem dem Meßwandler immanenten natürlichen Biegeschwingungsgrundmode entsprechen, in dem die Schwingungen des Meßrohrs solche Resonanzschwingungen sind, die genau einen Schwingungsbauch aufweisen. Die Nutzschwingungen sind bei einem zumindest abschnittsweise gekrümmtem Meßrohr zudem typischerweise so ausgebildet, daß das nämliches Meßrohr um eine ein einlaßseitiges und ein außlaßseitiges Ende des Meßrohrs imaginär verbindenden gedachte Schwingungsachse nach Art eines an einem Ende eingespannten Auslegers pendelt, während hingegen bei Meßwandlern mit einem geraden Meßrohr die Nutzschwingungen zumeist Biegeschwingungen in einer einzigen gedachten Schwingungsebene sind. Es ist zudem bekannt, das wenigstens eine Meßrohr zwecks Durchführung wiederkehrender Überprüfungen des Meßwandlers während des Betriebs des Meßgerät gelegentlich auch zu zeitlich andauernden Schwingungen außer Resonanz anzuregen sowie nämliche Schwingungen außer Resonanz auszuwerten, beispielsweise um, wie in der vorgenannten US-A 2012/0123705 beschrieben, allfällige Beschädigungen des wenigstens einen Meßrohrs möglichst frühzeitig zu detektieren, die eine unerwünschte Verringerung der Meßgenauigkeit und/oder der Betriebssicherheit des jeweiligen Meßgerät bewirken können.

Bei Meßwandlern mit zwei Meßrohren sind diese zumeist über ein sich zwischen den Meßrohren und einem einlaßseitigen Anschlußflansch erstreckenden einlaßseitig Verteilerstück sowie über ein sich zwischen den Meßrohren und einem auslaßseitigen Anschlußflansch erstreckenden auslaßseitig Verteilerstück in die jeweilige Prozeßleitung eingebunden. Bei Meßwandlern mit einem einzigen Meßrohr kommuniziert letzteres zumeist über ein einlaßseitig einmündendes Verbindungsrohr sowie über ein auslaßseitig einmündendes Verbindungsrohr mit der Prozeßleitung. Ferner umfassen Meßwandler mit einem einzigen Meßrohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist, und der im Betrieb im wesentlichen ruht oder entgegengesetzt zum Meßrohr oszilliert. Das mittels Meßrohr und Gegenschwinger gebildete Innenteil des Meßwandlers ist zumeist allein mittels der zwei Verbindungsrohre, über die das Meßrohr im Betrieb mit der Prozeßleitung kommuniziert, in einem schutzgebenden Meßwandler-Gehäuse gehaltert, insb. in einer Schwingungen des Innenteil relativ zum Meßwandler-Gehäuse ermöglichenden Weise. Bei den beispielsweise in der US-A 52 91 792, der US-A 57 96 010, der US-A 59 45 609, der US-B 70 77 014, der US-A 2007/0119264, der WO-A 01/02 816 oder auch der WO-A 99/40 394 gezeigten Meßwandlern mit einem einzigen, im wesentlichen geraden Meßrohr sind letzteres und der Gegenschwinger, wie bei herkömmlichen Meßwandlern durchaus üblich, zueinander im wesentlichen koaxial ausgerichtet, indem der Gegenschwinger als im wesentlichen gerader Hohlzylinder ausgebildet und im Meßwandler so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Zum aktiven Anregen bzw. Aufrechterhalten von Schwingungen des wenigstens einen Meßrohrs, nicht zuletzt auch den Nutzschwingungen, weisen Meßwandler vom Vibrationstyp des weiteren eine mittels wenigstens eines im Betrieb differentiell auf das wenigstens eine Meßrohr und den ggf. vorhandenen Gegenschwinger bzw. das ggf. vorhandene andere Meßrohr einwirkenden elektromechanischen Schwingungserreger auf. Der mittels eines Paars elektrischer Anschlußleitungen, beispielsweise inform von Anschlußdrähten und/oder inform von Leiterbahnen einer flexiblen Leiterplatte, mit der erwähnten Meßgerät-Elektronik elektrisch verbundene Schwingungserreger dient im besonderen dazu, angesteuert von einem von der Meßgerät-Elektronik generierten und entsprechend konditionierten, nämlich zumindest an sich verändernde Schwingungseigenschaften des wenigstens einen Meßrohrs angepaßten elektrischen Erregersignal, eine mittels nämlichen Erregersignals eingespeiste elektrische Erregerleistung in eine an einem vom Schwingungserreger gebildeten Angriffspunkt auf das wenigstens eine Meßrohr wirkende Antriebskraft zu wandeln.

Schwingungserreger marktgängiger Meßwandler vom Vibrationstyp sind typischerweise nach Art einer nach dem elektrodynamischen Prinzip arbeitenden Schwingspule aufgebaut, nämlich mittels einer - bei Meßwandlern mit einem Meßrohr und einem daran gekoppelten Gegenschwinger zumeist an letzterem fixierten - Spule sowie einen mit der wenigstens einen Spule wechselwirkenden als Anker dienenden Permanentmagneten gebildet, der entsprechend am zu bewegenden Meßrohr fixiert ist. Der Permanentmagnet und die Spule sind dabei üblicherweise so ausgerichtet, daß sie zueinander im wesentlichen koaxial verlaufen. Zudem ist bei herkömmlichen Meßwandlern der Schwingungserreger zumeist so ausgebildet und plaziert, daß er im wesentlichen mittig an das wenigstens eine Meßrohr angreift. Alternativ zu einem eher zentral und direkt auf das Meßrohr wirkenden Schwingungserreger können, wie u.a. in der eingangs erwähnten US-A 60 92 429, beispielsweise auch mittels zweier nicht im Zentrum des Meßrohres, sondern eher ein- bzw. auslaßseitig an diesem fixierten Schwingungserreger zum aktiven Anregung mechanischer Schwingungen des wenigstens einen Meßrohrs verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Meßwandler-Gehäuse wirkenden Schwingungserreger gebildete Erregeranordnungen verwendet werden.

Zum Erfassen von Schwingungsbewegungen des wenigstens einen Meßrohrs, nicht zuletzt auch den den Nutzschwingungen entsprechenden, weisen Meßwandler der in Rede stehenden Art ferner wenigstens einen am Meßrohr plazierten, beispielsweise mittels eines eigenen Paars elektrischer Anschlußleitungen mit der Meßgerät-Elektronik elektrisch verbundenen, Schwingungssensor auf, der dafür eingerichtet ist, nämliche Schwingungsbewegungen in ein diese repräsentierendes Schwingungsmeßsignal zu wandeln, das eine der Nutzfrequenz entsprechenden Signalfrequenz enthält, und nämliches Schwingungsmeßsignal der Meßgerät-Elektronik, beispielsweise nämlich einer mittels wenigstens eines Mikroprozessors gebildeten Meß- und Betriebsschaltung der Meßgerät-Elektronik, zur weiteren Verarbeitung zur Verfügung zu stellen. Bei Meßwandlern von marktgängigen vibronischen Dichte-Meßgeräten sind die Schwingungssensoren zumeist ebenfalls vom elektrodynamischen Typ, mithin nach Art einer Tauchspule aufgebaut. Dementsprechend sind auch die Schwingungssensoren einer solchen Sensoranordnung zumeist ebenfalls jeweils mittels eines am Meßrohr fixierten Permanentmagneten und wenigstens einer - beispielsweise am ggf. vorhanden anderen Meßrohr oder am ggf. vorhandenen Gegenschwinger fixierten - von einem Magnetfeld des Dauermagneten durchsetzten Spule gebildet, die infolge der Schwingungsbewegungen des wenigstens einen Meßrohrs zumindest zeitweise mit einer induzierten Meßspannung beaufschlagt ist.

Aufgrund der Nutzschwingungen des wenigstens einen Meßrohrs, können - nicht zuletzt auch für den Fall, daß die Nutzschwingungen des wenigstens einen Meßrohrs Biegeschwingungen sind - im strömenden Medium bekanntlich auch von der momentanen Massendurchflußrate abhängige Corioliskräfte induziert werden. Diese wiederum können von der Massendurchflußrate abhängige, sich den Nutzschwingungen überlagernde Coriolisschwingungen mit Nutzfrequenz bewirken, derart, daß zwischen einlaßseitigen und auslaßseitigen Schwingungsbewegungen des Nutzschwingungen ausführenden und zugleich vom Medium durchströmten wenigstens einen Meßrohrs eine auch von der Massedurchflußrate abhängige, mithin auch als Maß für die Massendurchflußmessung nutzbare Laufzeit- bzw. Phasendifferenz detektiert werden kann. Bei einem zumindest abschnittsweise gekrümmtem Meßrohr, bei dem für die Nutzschwingungen eine Schwingungsform, in der nämliches Meßrohr nach Art eines an einem Ende eingespannten Auslegers pendeln gelassen wird, gewählt ist, entsprechen die resultierenden Coriolisschwingungen beispielsweise jenem - gelegentlich auch als Twist-Mode bezeichneten - Biegeschwingungsmode, in dem das Meßrohr Drehschwingungen um eine senkrecht zur erwähnten gedachten Schwingungsachse ausgerichtete gedachte Drehschwingungsachse ausführt, wohingegen bei einem geraden Meßrohr, dessen Nutzschwingungen als Biegeschwingungen in einer einzigen gedachten Schwingungsebene ausgebildet sind, die Coriolisschwingungen beispielsweise als zu den Nutzschwingungen im wesentlichen koplanare Biegeschwingungen sind. Für den eingangs bereits erwähnten Fall, daß mittels des Meßgerät zusätzlich zur Dichte zudem auch die Massendurchflußrate des jeweils im Meßwandler geführten Mediums ermittelt werden soll, weisen Meßwandler der in Rede stehenden Art zwecks des Erfassens sowohl einlaßseitiger als auch auslaßseitiger Schwingungsbewegungen des wenigstens einen Meßrohrs und zum Erzeugen wenigstens zweier von der zu messenden Massendurchflußrate beeinflußten elektrischen Schwingungsmeßsignalen desweiteren zumeist zwei oder mehr entlang des Meßrohrs voneinander beabstandete Schwingungssensoren auf, die so ausgestaltet und angeordnet sind, daß die damit generierten und an die Meßgerät-Elektronik geleitete Schwingungsmeßsignale nicht nur, wie bereits erwähnt, jeweils eine Nutzsignalkomponente aufweisen, sondern daß zudem auch zwischen den Nutzsignalkomponenten beider Schwingungsmeßsignale eine von der Massendurchflußrate abhängige Laufzeit- bzw. Phasendifferenz meßbar ist. Alternativ oder in Ergänzung zur Messung auch der Massendurchflußrate zusätzlich zur Messung der Dichte ist es - wie bereits erwähnt bzw. u.a. in der eingangs erwähnten US-A 2011/0265580 gezeigt - zudem auch möglich, mittels solcher Meßwandler vom Vibrationstyp, mithin mittels damit gebildeten vibronischen Dichte-Meßgeräten zusätzlich auch eine Viskosität des hindurchströmenden Mediums direkt zu messen, beispielsweise basierend auf einer für die Anregung bzw. Aufrechterhaltung der Nutzschwingungen erforderlichen elektrischen Erregerleistung bzw. basierend auf einer anhand der Erregerleistung ermittelten Dämpfung der Nutzschwingungen, und inform qualifizierter Viskositäts-Meßwerte auszugeben.

Eine bei einem Meßwandler der in Rede stehenden Art - beispielsweise zu Bildung eines Schwingungserregers oder eines Schwingungssensors - verwendete Spule weist typischerweise einen, beispielsweise aus einem Kunststoff und/oder aus einer Keramik und/oder einem Metall bestehenden, Spulenträger mit einer sich von einem durch eine erste Stirnfläche gebildeten ersten Ende des Spulenträgers bis zu einem zu nämlichem ersten Ende distalen, durch eine, insb. zu nämlicher ersten Stirnfläche parallele, zweite Stirnfläche gebildeten zweiten Ende des Spulenträgers erstreckenden geraden Durchgangsöffnung. Um nämlichen Spulenträger ist ein, beispielsweise mit einer elektrisch isolierenden Lackschicht überzogener, aus einem elektrisch leitfähigen Material, beispielsweise Kupfer oder Platin bzw. einer Legierung davon, gewickelt. Die Endmontage eines solchen Spule erfolgt typischerweise, indem der den Spulendraht tragende Spulenträger am Gegenschwinger bzw. am Meßrohr des jeweiligen Meßwandlers unter Verwendung einer in der Durchgangsöffnung des Spulenträgers positionierten Schraube montiert wird. Typischerweise wird erst hernach, mithin bei bereits in Einbaulage befindlicher Spule jede der beiden Anschlußleitung mit jeweils einem - zunächst noch freien - Ende des Spulendrahts elektrisch leitend verbunden, beispielsweise nämlich manuell verlötet.

Aufgrund der regelmäßig sehr geringen Abstände zwischen den einzelnen bereits zusammengefügten Baugruppen des zu fertigenden Meßwandlers, nicht zuletzt bei Meßwandlern von kleiner nomineller Nennweite bzw. mit vergleichsweise kleinen Meßrohren, ist allerdings ein nicht unerhebliches Maß an Geschicklichkeit beim Hantieren der Anschlußleitungen bzw. der zum Verlöten erforderlichen Betriebsmittel, wie etwa eines entsprechenden Handlötgeräts bzw. des entsprechenden Lotmaterials, vonnöten, einhergehend mit einem entsprechend erhöhten Risiko, zunächst unerkannt fehlerhafte Lötverbindungen zu produzieren. Darüberhinaus besteht bei nämlichem Verlöten der Anschlußleitungen an die in Einbaulage befindliche Spule eine erhöhtes Risiko, den zumeist sehr dünnen Spulendraht zu zerreißen bzw. die gleichermaßen nur sehr dünne Isolation desselben zu verletzen, mithin die Spule zu beschädigen oder gar zu zerstören.

Eine Aufgabe der Erfindung besteht daher darin, eine Spule anzugeben, bei der zum einen das Verbinden von Spulendraht und Anschlußleitungen vereinfacht, und bei der zum anderen das Risiko des Zerstörens nämlicher Spule während oder nach dem Verbinden von Spulendraht und Anschlußleitungen im Vergleich zu herkömmlichen Spulen verringert ist; dies im besonderen auch bei Verwendung nämlicher Spule in einem Meßwandler vom Vibrationstyp.

Zur Lösung der Aufgabe besteht die Erfindung in einer Spule, beispielsweise für einen Meßwandler vom Vibrationstyp, umfassend:
- einen, beispielsweise aus einem metallischen Material bestehenden und/oder kreiszylinderförmigen und/oder scheibenförmigen, Grundkörper mit einer sich von einem durch eine erste Stirnfläche gebildeten ersten Ende des Grundkörpers bis zu einem zu nämlichem ersten Ende distalen, durch eine, beispielsweise zu nämlicher ersten Stirnfläche parallele, zweite Stirnfläche gebildeten zweiten Ende des Grundkörpers erstreckenden, beispielsweise geraden und/oder von einer ein Innengewinde aufweisenden Innenfläche des Grundkörpers umhüllten, Durchgangsöffnung;
- einen, beispielsweise aus einem Kunststoff und/oder aus einer Keramik und/oder einem Metall bestehenden, Spulenträger mit einer sich von einem durch eine erste Stirnfläche gebildeten ersten Ende des Spulenträgers bis zu einem zu nämlichem ersten Ende distalen, durch eine, beispielsweise zu nämlicher ersten Stirnfläche parallele, zweite Stirnfläche gebildeten zweiten Ende des Spulenträgers erstreckenden, beispielsweise geraden, Durchgangsöffnung, wobei der Spulenträger relativ zum Grundkörper so angeordnet ist,
-- daß die zweite Stirnfläche des Spulenträgers dem Grundkörper zugewandt und zwischen der zweiten Stirnfläche des Spulenträgers und der ersten Stirnfläche des Grundkörpers ein Zwischenraum ausgebildet ist,
-- und daß die Durchgangsöffnung des Spulenträgers mit der Durchgangsöffnung des Grundkörpers fluchtet, beispielsweise derart, daß darin eine sich sowohl durch die Durchgangsöffnung als auch die Durchgangsöffnung erstreckende Schraube positionierbar ist;
- eine sowohl von der Durchgangsöffnung des Spulenträgers als auch der Durchgangsöffnung des Grundkörpers aufgenommene, beispielsweise sich nämlich über das das zweite Ende des Grundkörpers hinaus erstreckende und/oder als Senkkopf-Schraube ausgebildete, Schraube zum mechanischen Verbinden von Spulenträger und Grundkörper;
- einen um den Spulenträger gewickelten, beispielsweise metallischen und/oder mit einer elektrisch isolierenden Lackschicht überzogenen, Spulendraht aus einem elektrisch leitfähigen Material, beispielsweise nämlich aus Kupfer oder aus einer Kupferlegierung oder aus Platin oder aus einer Platinlegierung;
- sowie wenigstens zwei, jeweils anteilig in dem zwischen Spulenträger und Grundkörper gebildeten Zwischenraum plazierte, mittels eines innerhalb des Zwischenraum bewirkten Kraftschlusses fixierte Anschlußleitungen, von denen
-- eine erste Anschlußleitung wenigstes eine mit einem ersten Ende des Spulendrahts elektrisch leitend verbundene, beispielsweise metallische und/oder zumindest teilweise von einer textilen Isolation umhüllte, Ader aus elektrisch leitfähigem Material, beispielsweise nämlich aus Silber oder einer Silberlegierung oder Kupfer oder einer Kupferlegierung, und
-- eine zweite Anschlußleitung wenigstes eine mit einem zweiten Ende des Spulendrahts elektrisch leitend verbundene, beispielsweise metallische und/oder zumindest teilweise von einer textilen Isolation umhüllte, Ader aus elektrisch leitfähigem Material, beispielsweise nämlich aus Silber oder einer Silberlegierung oder Kupfer oder einer Kupferlegierung oder aus dem gleichen Material wie die Ader der ersten Anschlußleitung, aufweisen,
wobei der Grundkörper, der Spulenträger zusammen mit den Anschlußleitungen dafür eingerichtet sind, im Zwischenraum einen die Anschlußleitungen fixierenden Kraftschluß zu bewirken.

Darüberhinaus besteht die Erfindung ferner auch in einem Meßwandler vom Vibrationstyp, umfassend:
- wenigstens ein, beispielsweise zumindest abschnittsweise gerades und/oder zumindest abschnittsweise gekrümmtes, Meßrohr, das ein von einer Rohrwand umgebenes Lumen aufweist und dafür eingerichtet ist, in einem Lumen ein fließfähiges Medium, beispielsweise eine Gas und/oder eine Flüssigkeit, zu führen und währenddessen vibrieren gelassen zu werden, beispielsweise derart, daß nämliches Metallrohr mechanischen Schwingungen um eine diesem zugehörige statische Ruhelage ausführt, die geeignet sind, im strömenden Medium von einer Massendurchflußrate abhängige Corioliskräfte zu induzieren, und/oder daß nämliches Metallrohr mechanischen Schwingungen um eine diesem zugehörige statische Ruhelage ausführt, die geeignet sind, im strömenden Medium von einer Viskosität nämlichen Mediums abhängige Reibungskräfte zu induzieren, und/oder daß nämliches Metallrohr mechanischen Schwingungen um eine diesem zugehörige statische Ruhelage ausführt, die geeignet sind, im strömenden Medium von einer Dichte nämlichen Mediums abhängige Trägheitskräfte zu induzieren;
- einen mit dem wenigstens einen Meßrohr verbundenen, beispielsweise nämlich außen an dessen Rohrwand fixierten, Permanentmagneten;
- sowie eine Spule gemäß einem der vorherigen Ansprüche, wobei nämliche Spule von einem Magnetfeld des Permanentmagneten durchflutet ist.

Nach einer ersten Ausgestaltung der erfindungsgemäßen Spule ist vorgesehen, daß die erste Stirnfläche des Grundkörpers wenigstens eine, beispielsweise seitlich von dessen Durchgangsöffnung beabstandete und/oder rillenförmige, Ausnehmung zur Aufnahme wenigstens einer der wenigstens zwei Anschlußleitungen, beispielsweise nämlich zur Aufnahme sowohl der der ersten Anschlußleitung als auch der der zweiten Anschlußleitung, aufweist. Diese Ausgestaltung der Erfindung weiterbildend ist ferner vorgesehen, daß die erste Stirnfläche des Grundkörpers eine, beispielsweise seitlich von dessen Durchgangsöffnung beabstandete und/oder rillenförmige, erste Ausnehmung zur Aufnahme der ersten Anschlußleitung sowie eine, beispielsweise seitlich von dessen Durchgangsöffnung beabstandete und/oder rillenförmige und/oder zur ersten Ausnehmung parallele, zweite Ausnehmung zur Aufnahme der zweiten Anschlußleitung aufweist; und daß die erste Anschlußleitung anteilig von der ersten Ausnehmung und die zweite Anschlußleitung anteilig von der zweiten Ausnehmung aufgenommen sind.

Nach einer zweiten Ausgestaltung der erfindungsgemäßen Spule ist vorgesehen, daß die zweite Stirnfläche des Spulenträgers wenigstens eine, beispielsweise seitlich von dessen Durchgangsöffnung beabstandete und/oder rillenförmige, Ausnehmung zur Aufnahme wenigstens einer der wenigstens zwei Anschlußleitungen, beispielsweise nämlich zur Aufnahme sowohl der der ersten Anschlußleitung als auch der der zweiten Anschlußleitung, aufweist.

Nach einer dritten Ausgestaltung der erfindungsgemäßen Spule ist vorgesehen, daß Spulenträger und Grundkörper so angeordnet sind, daß die erste Stirnfläche des Grundkörpers und die zweite Stirnfläche des Spulenkörpers einander zugewandt sind, beispielsweise derart, daß Spulenkörper und Grundkörper einander flächig kontaktieren.

Nach einer vierten Ausgestaltung der erfindungsgemäßen Spule ist vorgesehen, daß der Spulenträger ein, beispielsweise hohlzylindrisches, Wicklungssegment, ein an ein erstes Ende des Wicklungssegments grenzendes, beispielsweise hohlzylindrisches und/oder unter Bildung einer ringförmigen Wicklungsbegrenzungsfläche auskragendes, erstes Randsegment sowie ein an ein zum ersten Ende distales zweites Ende des Wicklungssegments grenzendes, beispielsweise eine kegelstumpfförmige Kontur aufweisendes und/oder unter Bildung einer ringförmigen Wicklungsbegrenzungsfläche auskragendes, zweiten Randsegment aufweist, und daß der Spulendraht nämlich auf das Wicklungssegment gewickelt ist. Diese Ausgestaltung der Erfindung weiterbildend ist ferner vorgesehen, daß die Durchgangsöffnung des Spulenträgers innerhalb des zweiten Randsegments eine, beispielsweise stufenförmige, Querschnittsänderung aufweist, beispielsweise derart, daß eine Auflagefläche für einen Schraubenkopf der Schraube gebildet ist; und/oder daß die Schraube einen Schraubenkopf aufweist, und so innerhalb des Spulenträgers plaziert ist, daß der Schraubenkopf innerhalb des zweiten Randsegments positioniert ist.

Nach einer fünften Ausgestaltung der erfindungsgemäßen Spule ist vorgesehen, daß mittels der Schraube eine Schraubverbindung gebildet ist, die eine axiale, nämlich in Richtung einer gedachten Längsachse der Schraube wirkende Spannkraft auf den Spulenträger überträgt, beispielsweise derart, daß Spulenträger und/oder Schraube elastische Verformungen aufweisen.

Nach einer sechsten Ausgestaltung der erfindungsgemäßen Spule ist vorgesehen, daß Grundkörper, Spulenträger zusammen mit den Anschlußleitungen dafür eingerichtet sind, den die Anschlußleitungen fixierenden Kraftschluß im Zwischenraum mit einer von einer mittels der Schraube auf den Spulenträger übertragenen Spannkraft abhängigen Haftreibkraft zu bewirken. Nach einer siebenten Ausgestaltung der erfindungsgemäßen Spule ist vorgesehen, daß der Spulendraht aus Kupfer oder einer Kupfer-Legierung besteht.

Nach einer achten Ausgestaltung der erfindungsgemäßen Spule ist vorgesehen, daß die Ader der ersten Anschlußleitung aus Silber oder einer Silberlegierung besteht.

Nach einer neunten Ausgestaltung der erfindungsgemäßen Spule ist vorgesehen, daß die Ader der zweiten Anschlußleitung aus dem gleichen Material wie die Ader der ersten Anschlußleitung besteht.

Nach einer zehnten Ausgestaltung der erfindungsgemäßen Spule ist vorgesehen, daß die Ader der ersten Anschlußleitung zumindest teilweise von einer textilen Isolation, beispielsweise einer Glasfaserisolation, umhüllt ist.

Nach einer elften Ausgestaltung der erfindungsgemäßen Spule ist vorgesehen, daß die Ader der zweiten Anschlußleitung zumindest teilweise von der gleichen Isolation wie die Ader der ersten Anschlußleitung umhüllt ist.

Nach einer zwölften Ausgestaltung der erfindungsgemäßen Spule ist vorgesehen, daß der Spulenträger aus, beispielsweise thermoplastischem, Kunststoff, beispielsweise Polyetheretherketon (PEEK), besteht.

Nach einer dreizehnten Ausgestaltung der erfindungsgemäßen Spule ist vorgesehen, daß die Ader der ersten Anschlußleitung stoffschlüssig mit dem ersten Ende des Spulendrahts verbunden ist.

Nach einer vierzehnten Ausgestaltung der erfindungsgemäßen Spule ist vorgesehen, daß die Ader der zweiten Anschlußleitung stoffschlüssig mit dem zweiten Ende des Spulendrahts verbunden ist.

Nach einer Weiterbildung der erfindungsgemäßen Spule umfaßt diese weiters ein, beispielsweise aus einem Kunststoff und/oder aus einer Keramik und/oder einem Metall und/oder aus dem gleichen Material wie der Spulenträger bestehenden, Formteil mit einer sich von einem durch eine erste Stirnfläche gebildeten ersten Ende des Formteils bis zu einem zu nämlichem ersten Ende distalen, durch eine, beispielsweise zu nämlicher ersten Stirnfläche parallele, zweite Stirnfläche gebildeten zweiten Ende des Formteils erstreckenden, beispielsweise geraden, Durchgangsöffnung. Ferner ist bei dieser Weiterbildung der Erfindung vorgesehen, daß das Formteil im zwischen Spulenträger und Grundkörper gebildeten Zwischenraum plaziert und relativ zu Spulenträger und Grundkörper so angeordnet ist, daß die Durchgangsöffnung des Formteils sowohl mit der Durchgangsöffnung des Grundkörpers als auch mit der Durchgangsöffnung des Spulenträgers, beispielsweise derart, daß ein Hindurchführen der Schraube ermöglicht ist, fluchtet; und daß die Schraube anteilig auch von der Durchgangsöffnung des Formteils aufgenommen ist.

Nach einer ersten Ausgestaltung dieser Weiterbildung der erfindungsgemäßen Spule ist vorgesehen, daß die das Formteil relativ zu Spulenträger und Grundkörper so angeordnet ist, daß die erste Stirnfläche des Formteils dem Spulenträger und die zweite Stirnfläche des Formteils dem Grundkörper zugewandt sind, beispielsweise derart, daß Formteil und Grundkörper einander flächig kontaktieren und/oder daß Formteil und Spulenträger einander flächig kontaktieren.

Nach einer zweiten Ausgestaltung dieser Weiterbildung der erfindungsgemäßen Spule ist vorgesehen, daß die erste Stirnfläche des Formteils wenigstens eine, beispielsweise seitlich von dessen Durchgangsöffnung beabstandete und/oder rillenförmige, Ausnehmung zur Aufnahme wenigstens einer der wenigstens zwei Anschlußleitungen, beispielsweise nämlich zur Aufnahme sowohl der der ersten Anschlußleitung als auch der der zweiten Anschlußleitung, aufweist.

Nach einer dritten Ausgestaltung dieser Weiterbildung der erfindungsgemäßen Spule ist vorgesehen, daß die erste Stirnfläche des Formteils eine, beispielsweise seitlich von dessen Durchgangsöffnung beabstandete und/oder rillenförmige, erste Ausnehmung zur Aufnahme der ersten Anschlußleitung sowie eine, beispielsweise seitlich von dessen Durchgangsöffnung beabstandete und/oder rillenförmige und/oder zur ersten Ausnehmung parallele, zweite Ausnehmung zur Aufnahme der zweiten Anschlußleitung aufweist; und daß die erste Anschlußleitung anteilig von der ersten Ausnehmung und die zweite Anschlußleitung anteilig von der zweiten Ausnehmung aufgenommen sind.

Ein Grundgedanke der Erfindung besteht darin, die mechanische Festigkeit der gesamten Spule, einschließlich der mit dem Spulendraht verbundenen Anschlußleitungen, dadurch zu erhöhen, indem die Anschlußleitungen unmittelbar am Spulenträger befestigt sind, einhergehend mit einer entsprechenden Fixierung auch der mit den Anschlußleitungen verbundenen Enden des auf den Spulenträger gewickelten Spulendrahts. Die Spule kann somit in vorteilhafter Weise auch als eine vorkonfektionierte, nämlich vor dem Zusammenbau mit weiteren Baugruppen, beispielsweise auch weiteren Baugruppen eines Meßwandlers vom Vibrationstyp, fertiggestellte Baugruppe ausgestaltet werden, ohne ein erhebliches Risiko für ein nachträgliches Beschädigen der Spule, etwa durch Abreißen der Anschlußleitungen bzw. des Spulendrahts beim Transport oder beim Einbau nämlicher Spule, besorgen zu müssen. Dies hat u.a. auch den Vorteil, daß das bei der Herstellung von Meßwandlern vom Vibrationstyp eher aufwendige konventionelle Verbinden von Spulendraht und Anschlußleitungen in Einbaulage der jeweiligen Spule, nunmehr dadurch abgelöst werden kann, daß stattdessen das Verbinden von Spulendraht und Anschlußleitungen auch außerhalb der Einbaulage bzw. vom jeweiligen Meßrohr entfernt, mithin an einem frei zugänglichen Arbeitsplatz durchgeführt werden kann.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:
- Fig. 1, 2, 3: in unterschiedlichen, teilweise auch zerlegten Ansichten ein Ausführungsbeispiel einer erfindungsgemäßen, beispielsweise als Bestandteil eines Meßwandlers vom Vibrationstyp bzw. eines damit gebildeten vibronischen Meßgeräts dienlichen, Spule;
- Fig. 4, 5, 6: in geschnittener Seitenansicht Ausgestaltungsvarianten einer erfindungsgemäßen Spule;
- Fig. 7, 8, 9: in unterschiedlichen, teilweise auch zerlegten Ansichten ein weiteres Ausführungsbeispiel einer erfindungsgemäßen, beispielsweise als Bestandteil eines Meßwandlers vom Vibrationstyp bzw. eines damit gebildeten vibronischen Meßgeräts dienlichen, Spule; und
- Fig. 10: in einer geschnittenen Seitenansicht ein Meßrohr eines Meßwandlers vom Vibrationstyp mit einem daran befestigten Permanentmagneten und einer erfindungsgemäßen, mit dem Permanentmagneten interagierenden Spule.

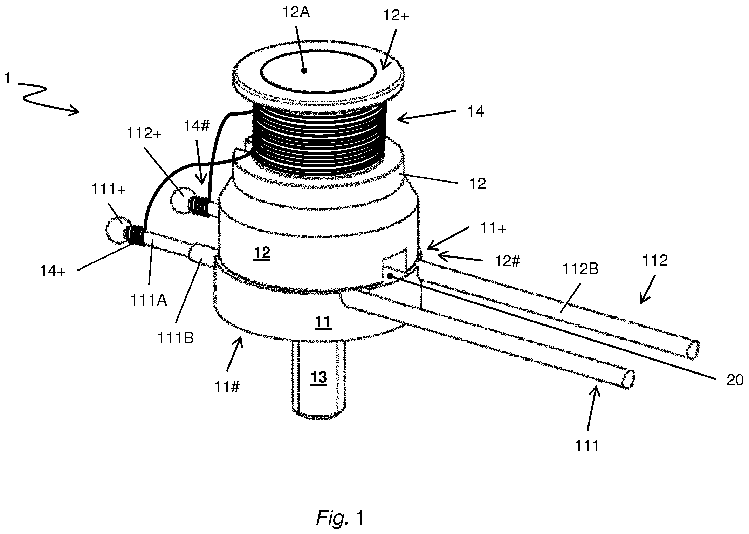

In den Fig. 1, 2 und 3 ist ein Ausführungsbeispiel einer erfindungsgemäßen, beispielsweise als Bestandteil eines Meßwandlers vom Vibrationstyp bzw. eines damit gebildeten vibronischen Meßgeräts dienlichen, Spule 1 dargestellt.

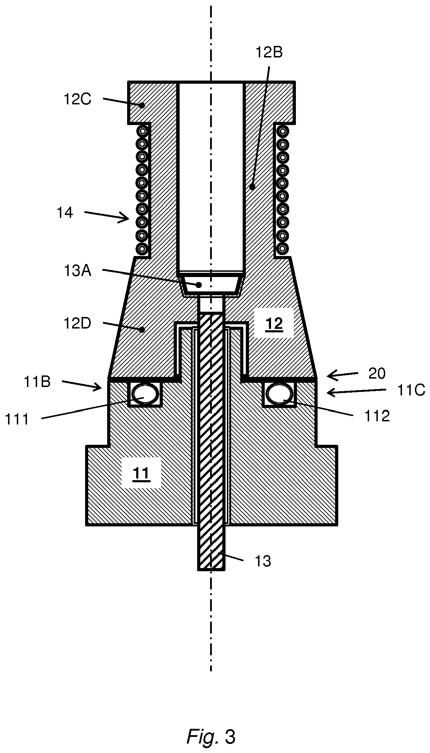

Die Spule 1 umfaßt einen Grundkörper 11 mit einem durch eine erste Stirnfläche gebildeten ersten Ende 11+ und einem zu nämlichem Ende 11+ distalen, durch eine, beispielsweise zu nämlicher ersten Stirnfläche parallele, zweite Stirnfläche gebildeten zweiten Ende 11#, einen Spulenträger 12 mit einem durch eine erste Stirnfläche gebildeten ersten Ende 12+ und einem zu nämlichem Ende 12+ distalen, durch eine, beispielsweise zu nämlicher ersten Stirnfläche parallele, zweite Stirnfläche gebildeten zweiten Ende 12#, sowie eine um den Spulenträger gewickelten Spulendraht 14 aus einem elektrisch leitfähigen Material, beispielsweise nämlich aus Kupfer oder aus einer Kupferlegierung oder aus Platin oder aus einer Platinlegierung. Der - hier kreiszylinderförmig bzw. scheibenförmig ausgebildete - Grundkörper 11 kann beispielsweise aus einem metallischen Material, beispielsweise Stahl oder Titan bzw. einer Titan-Legierung, hergestellt sein. Gleichermaßen kann beispielsweise auch der Spulenträger aus einem Metall, beispielsweise nämlich Stahl, Titan bzw. einer Titan-Legierung oder auch aus dem gleichen Metall wie der Grundkörper 11, bestehen. Als Material für den Spulenträger 12 kommen darüberhinaus aber auch Keramik wie auch Kunststoff, beispielsweise auch ein thermoplastischer Kunststoff, beispielsweise nämlich Polyetheretherketon (PEEK), in Frage. Der sSchraube 13, beispielsweise auch wiederlösbar, miteinander mechanisch verbunden zu werden. Dafür weisen der sich von dessen Ende 11+ bis zu dessen Ende 11# erstreckende, beispielsweise gerade bzw. kreiszylindrische, Durchgangsöffnung 11A und der Spulenträger 12 sich von dessen Ende 12+ bis zu dessen Ende 12# erstreckende, beispielsweise gerade bzw. lediglich abschnittsweise kreiszylindrische, Durchgangsöffnung 12A auf. Desweiteren ist der Spulenträger 12 relativ zum Grundkörper 11 so angeordnet, daß die zweite Stirnfläche des Spulenträgers dem Grundkörper 11 - hier nämlich beispielsweise der ersten Stirnfläche des Grundkörpers 11 - zugewandt und die Durchgangsöffnung 12A des Spulenträgers 12 mit der Durchgangsöffnung 11A des Grundkörpers fluchte, und zwar derart, daß, wie aus der Zusammenschau der Fig. 1, 2 und 3 ohne weiteres ersichtlich, nämliche - beispielsweise als eine Senkkopfschraube ausgebildete - Schraube 13 so darin positionierbar ist, daß sie teilweise durch die Durchgangsöffnung 11A wie auch teilweise durch die Durchgangsöffnung 12A aufgenommen ist. Um ein Verschrauben der Spule 1 mit weiteren Anbauteile zu ermöglichen bzw. eine einfach zu hantierende Verbindungsmöglichkeit für die Spule 1 bereitzustellen, ist die Schraube 13 nach einer Ausgestaltung der Erfindung, abgestimmt auf die jeweilige Größe der beiden Durchgangsöffnungen 11A, 12A, so dimensioniert, daß sie sich über das das zweite Ende des Grundkörpers hinaus erstreckt, nachdem sie in den beiden Durchgangsöffnungen 11A, 12A positioniert ist. Zum Herstellen einer Grundkörper 11 und Spulenträger 12 aneinander fixierenden Schraubverbindung kann beispielsweise eine zusätzliche, gegen den Grundkörper 11 drückende Schraubenmutter dienen; die Schraubverbindung kann aber beispielsweise auch dadurch hergestellt werden, daß, wie auch in Fig. 3 schematisch angedeutet, eine die Durchgangsbohrung 11A des Grundkörpers 11 umhüllende Innenfläche des Grundkörpers 11 ein Innengewinde aufweist, das mit einem korrespondierenden Außengewinde der Schraube 13 im Eingriff ist.

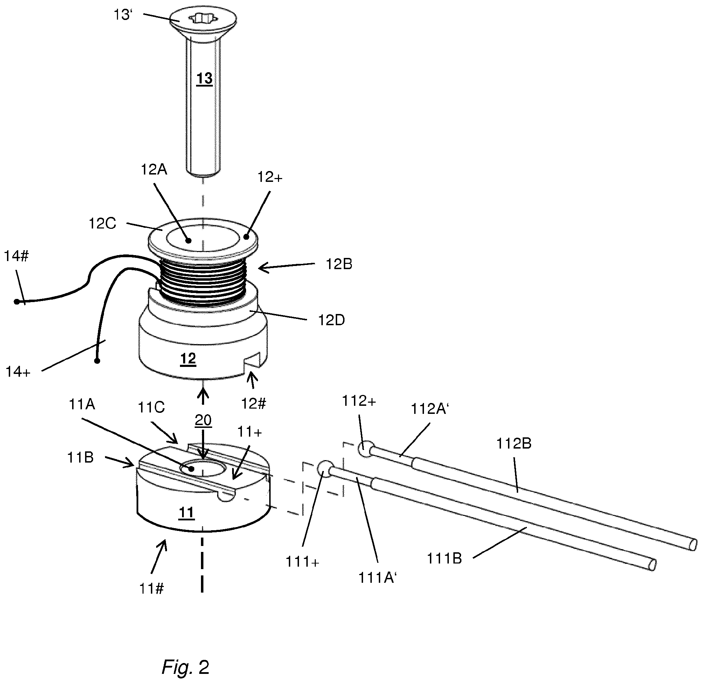

Wie aus den Fig. 1, 2 bzw. 3 ersichtlich, weist die Spule 1 ferner eine erste Anschlußleitung 111 mit wenigstes einer Ader 111A aus elektrisch leitfähigem Material sowie wenigstens eine zweite Anschlußleitung 112 mit wenigstens einer Ader 112A aus elektrisch leitfähigem Material auf. Die Adern der Anschlußleitungen 111, 112 können beispielsweise aus dem gleichen Material bzw. beispielsweise jeweils aus Silber oder einer Silberlegierung oder Kupfer oder einer Kupferlegierung bestehen. Jede der Anschlußleitungen 111, 112 weist - wie auch aus einer Zusammenschau der Fig. 1 und 2 ohne weiteres ersichtlich - zudem eine die jeweilige Ader 111' bzw. 112' ummantelnde, beispielsweise schlauchartige, Isolation 111" bzw. 112" aus einem elektrisch nicht oder schlecht leitenden Material auf. Nicht zuletzt für den erwähnten Fall, daß die Spule 1 als Bestandteil eines Meßaufnehmers vom Vibrationstyp dienlich, mithin dafür vorgesehen ist, im Betrieb mechanischen Schwingungen ausgesetzt zu sein, weisen die Anschlußleitungen 111, 112 nach einer weiteren Ausgestaltung jeweils eine, beispielsweise mittels Glasfasern hergestellte, textile Isolation zum elektrischen Isolierung der Adern auf. Alternativ oder in Ergänzung dazu kann die Isolation aber beispielsweise auch mittels einer die jeweilige Ader ummantelnden homogenen Lackschicht oder einer Kunststoffhülle gebildet sein. Wie in Fig. 1 schematisch dargestellt, sind die Ader der Anschlußleitung 111 mit einem - selbstredend freiliegenden, nämlich nicht von einer Isolation umhüllten - ersten Ende 14+ des Spulendrahts 14 und die Ader der Anschlußleitung 112 mit einem - gleichermaßen wie das erste Ende 14+ nicht von einer Isolation umhüllten - zweiten Ende 14+ des Spulendrahts elektrisch leitend verbunden, beispielsweise nämlich stoffschlüssig bzw. mittels einer Weich- oder einer Hartlotverbindung.

Bei der erfindungsgemäßen Spule 1 wird der konstruktionsbedingt zwischen der zweiten Stirnfläche des Spulenträgers und der ersten Stirnfläche des Grundkörpers ausgebildete Zwischenraum 20 im besonderen dafür genutzt, die Anschlußleitungen 111, 112 zusätzlich zu fixieren, derart, daß eine die vorbezeichnete - nämlich zwischen der Ader der Anschlußleitung 111 und dem Ende 14+ des Spulendrahts bzw. der Ader der Anschlußleitung 112 und dem Ende 14# des Spulendrahts hergestellten - Verbindung zwischen den Anschlußleitungen 111, 112 und dem Spulendraht 14 bzw. auch den Spulendraht 14 an sich vor allfälligen Überbeanspruchungen, etwa infolge von auf die Anschlußleitungen einwirkenden Zug- oder auch Rüttelkräften, bzw. einer damit einhergehenden Zerstörung schützende Zugentlastung für die Anschlußleitungen 111, 112 bereitgestellt wird. Dafür ist bei der erfindungsgemäßen Spule jede der wenigstens zwei Anschlußleitungen 111, 112 in Einbaulage jeweils anteilig in dem zwischen Spulenträger und Grundkörper gebildeten Zwischenraum 20 plaziert, um mittels eines daselbst und im Zusammenspiel mit Grundkörper, Spulenträger und Schraube gebildeten Kraftschlusses fixiert zu werden. Im hier gezeigten Ausführungsbeispiel ist dafür mittels der Schraube 13 eine Schraubverbindung gebildet, die eine axiale, nämlich in Richtung einer gedachten Längsachse der Schraube wirkende Spannkraft auf den Spulenträger überträgt; dies im besonderen in der Weise, daß Spulenträger und/oder Schraube elastische Verformungen erfahren. Grundkörper 11, Spulenträger 12 zusammen mit den Anschlußleitungen 111, 112 sind ferner dafür eingerichtet, im Zwischenraum 20 unter Ausnutzung von durch elastische Verformungen von Spulenträger bzw. Schraube generierten Rückstell- bzw. Spannkräften einen die Anschlußleitungen fixierenden Kraftschluß zu bewirken. Die Höhe der Spannkräfte bzw. der einer daraus resultierenden, die Anschlußleitung fixierenden Haftreibkraft kann mittels der Schraube bzw. durch ein zu deren Befestigung aufgewendetes Anzugsmoment entsprechend eingestellt werden.

Nicht zuletzt bei Verwendung von Anschlußleitungen mit einer textilen Isolation für die jeweilige Ader ist ferner vorgesehen, die Isolation sich zumindest bis in den Zwischenraum 20 hinein, idealerweise aber - wie in Fig. 1 angedeutet- auch geringfügig darüberhinaus erstrecken zu lassen, derart, daß innerhalb des Zwischenraums 20 verlegte Abschnitte jede der Adern 111', 112' von der jeweils zugehörigen Isolation 111" bzw.112" umhüllt sind. Dadurch können zum einen sehr hohe Haltekräfte für den die Anschlußleitungen 111, 112 fixierenden Kraftschluß erzielt und zum anderen auf sehr einfach, gleichwohl effektive Weise ein Zerspleißen oder Einreißen der Isolation verhindert, zumindest aber ein weiteres Ausbreiten allfälliger Einrisse in der Isolation sicher unterbunden werden.

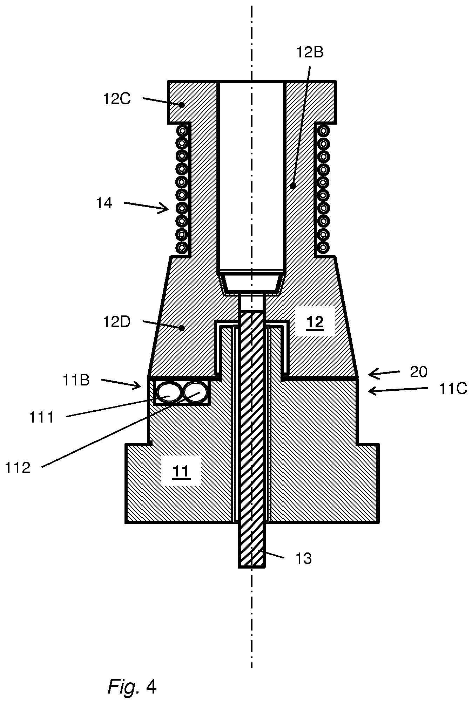

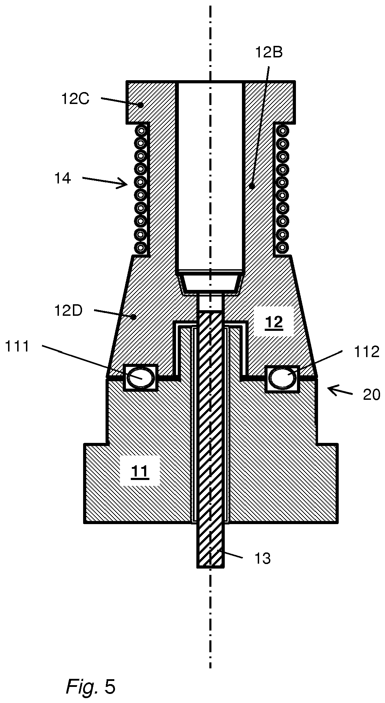

Zwecks einer Verbesserung eines Seitenhalts für die innerhalb des Zwischenraums 20 positionierten Teilabschnitte der Anschlußleitungen 111, 112 ist nach einer weiteren Ausgestaltung der Erfindung in die erste Stirnfläche des Grundkörpers 11 wenigstens eine seitlich von dessen Durchgangsöffnung 11A beabstandete - beispielsweise rillenförmige - Ausnehmung 11B zur Aufnahme wenigstens einer der wenigstens zwei Anschlußleitungen 111, 112 bzw. eines Teilabschnitts davon vorgesehen. Nämliche Ausnehmung 11B kann, wie auch in Fig. 4 schematisch dargestellt, dafür eingerichtet sein, sowohl die Anschlußleitung 111 als auch die Anschlußleitung 112 bzw. eines jeweiligen Teilabschnitts davon aufzunehmen. Es kann aber durchaus auch von Vorteil sein, zusätzlich zur Ausnehmung 11B eine weitere, zweite, beispielsweise ebenfalls rillenförmig bzw. zur Ausnehmung 11C baugleiche - Ausnehmung 12C in die zweite Stirnfläche des Grundkörpers 11 einzuformen, beispielsweise derart, daß die beiden - hier zueinander im wesentlichen parallelen bzw. im wesentlichen geraden - Ausnehmungen 11B, 11C voneinander beabstandet ist, gleichwohl jede der beiden Ausnehmungen 11B, 11C im seitlichen Abstand zur Durchgangsöffnung 11A verläuft. Nach einer anderen Ausgestaltung der Erfindung weist daher die erste Stirnfläche des Grundkörpers 11 sowohl eine seitlich von dessen Durchgangsöffnung 11A beabstandete - beispielsweise rillenförmige - Ausnehmung 12B zur Aufnahme der Anschlußleitung 111 sowie eine seitlich von der Durchgangsöffnung 11A beabstandete - beispielsweise rillenförmige und/oder zur ersten Ausnehmung parallele - zweite Ausnehmung 12C zur Aufnahme der Anschlußleitung 112 auf, und ist zudem vorgesehen, daß die Anschlußleitung 111 anteilig von der Ausnehmung 12B und die Anschlußleitung 112 anteilig von der Ausnehmung 12C aufgenommen sind. Alternativ oder in Ergänzung kann aber auch der Spulenkörper, wie auch in Fig. 5 bzw. schematisch dargestellt, eine oder mehrerer solcher Ausnehmungen zur Aufnahme der Anschlußleitung 111 bzw. 112 aufweisen. Beispielsweise können Spulenträger und Grundkörper auch so angeordnet sein, daß die erste Stirnfläche des Grundkörpers und die zweite Stirnfläche des Spulenkörpers nicht nur einander zugewandt sind, sondern daß zudem Spulenkörper und Grundkörper auch einander flächig kontaktieren. Darüberhinaus können die Ausnehmung beispielsweise auch einen Formschluß mit der jeweils zugehörigen Anschlußleitung herbeiführende, mithin die in Einbaulage etablierten Halte- bzw. Auszugkräfte erhöhendes Querrillen bzw. -riefen aufweisen.

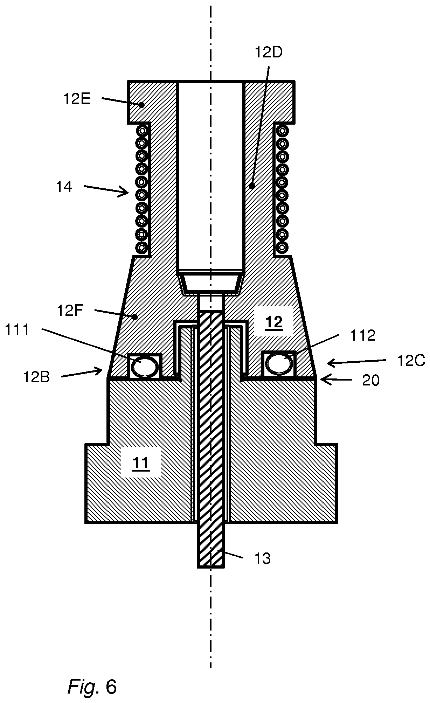

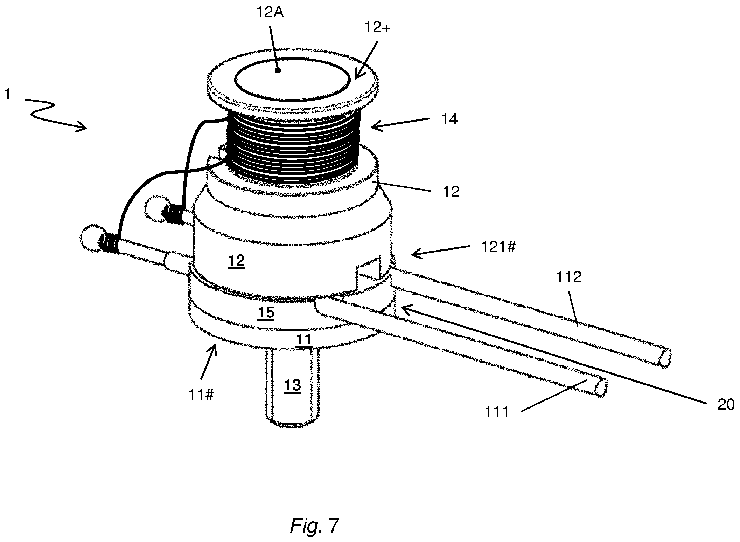

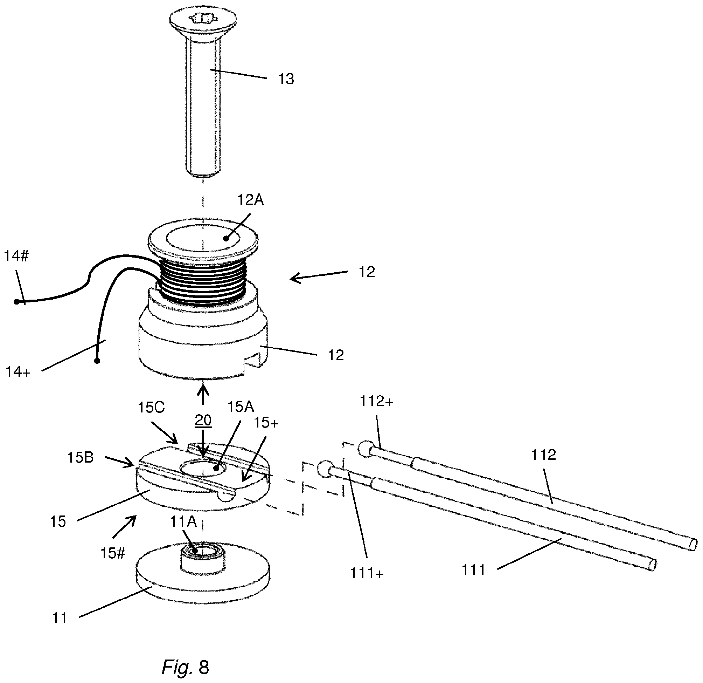

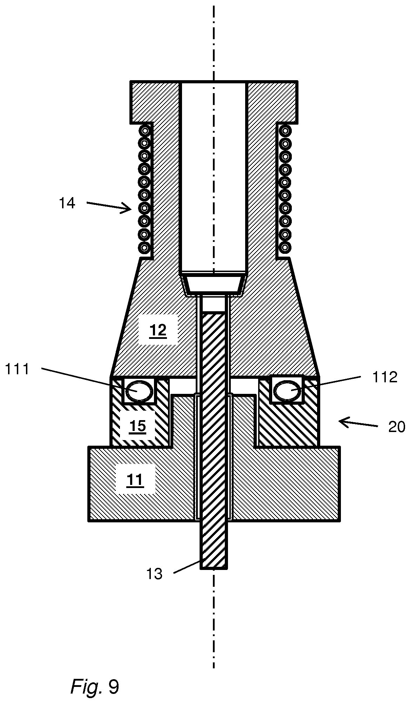

Zur Vereinfachung der Montage der Spule 1, nicht zuletzt auch bei der Positionierung der Anschlußleitungen, aber auch zwecks einer Erhöhung der durch den Kraftschluß erzielten Haltekräfte weist die Spule 1 nach einer weiteren Ausgestaltung der Erfindung ein Formteil 15 mit einem durch eine erste Stirnfläche gebildeten ersten Ende 15+ und mit einem zu nämlichem ersten Ende 15+ distalen, durch eine, beispielsweise zu nämlicher ersten Stirnfläche parallele, zweite Stirnfläche gebildeten zweiten Ende 15# auf. Im hier gezeigten Ausführungsbeispiel ist nämliches - beispielsweise aus einem Kunststoff und/oder aus einer Keramik und/oder einem Metall und/oder aus dem gleichen Material wie der Spulenträger bestehende - Formteil 15 relativ zu Spulenträger 12 und Grundkörper 11 so angeordnet, daß die erste Stirnfläche des Formteils dem Spulenträger und die zweite Stirnfläche des Formteils dem Grundkörper zugewandt sind. Ferner sind das Formteil und Grundkörper so ausgestaltet, daß sie in Einbaulage einander möglichst flächig kontaktieren. Das Formteil 15 weist zudem eine sich vom Ende 15+ bis zum Ende 15# erstreckende, beispielswiese gerade und/oder kreiszylindrische, Durchgangsöffnung 15A auf und ist in Einbaulage im zwischen Spulenträger und Grundkörper gebildeten Zwischenraum 20 plaziert. Das Formteil 15 ist dabei relativ zu Spulenträger und Grundkörper so angeordnet, daß die Durchgangsöffnung 15A - wie aus einer Zusammenschau der Fig. 6, 7 und 8 ohne weiteres ersichtlich - sowohl mit der Durchgangsöffnung 11A des Grundkörpers 11 als auch mit der Durchgangsöffnung 12A des Spulenträgers 12A fluchtet, nämlich ebenfalls so, daß, wie aus der Zusammenschau der Fig. 6, 7 und 8 ohne weiteres ersichtlich, die Schraube 13 zugleich durch die Durchgangsöffnung 11A, die Durchgangsöffnung 12A wie auch die die Durchgangsöffnung 15A hindurchführbar, mithin teilweise von der Durchgangsöffnung 11A, der Durchgangsöffnung 12A wie auch der Durchgangsöffnung 15A aufgenommen ist. Darüberhinaus kann auch das Formteil 15, wie aus der Zusammenschau der Fig. 7, 8 und 9 ersichtlich, eine oder mehrere seitlich von dessen Durchgangsöffnung 15A beabstandete bzw. rillenförmige Ausnehmungen zur Aufnahme einer oder mehrerer Anschlußleitungen der Spule aufweisen. Daher ist nach einer weiteren Ausgestaltung der Erfindung in die erste Stirnfläche des Formteils 15 wenigstens eine Ausnehmung 15B zur Aufnahme wenigstens einer der wenigstens zwei Anschlußleitungen 111, 112, beispielsweise auch zur Aufnahme sowohl der Anschlußleitung 111 als auch der der Anschlußleitung 112, eingeformt. Darüberhinaus kann das Formteil 15 aber auch zumindest eine weitere - beispielsweise auch zur Ausnehmung 15B parallel bzw. baugleich - Ausnehmung 15C aufweisen, so daß, wie auch in den Fig. 7, 8 und 9 dargestellt, die Anschlußleitung 111 anteilig von der Ausnehmung 15B und die Anschlußleitung 112 anteilig von der Ausnehmung 15C aufgenommen sind. Die wenigstens eine Ausnehmung bzw. die Ausnehmungen 111, 112 und die Anschlußleitungen können in vorteilhafter Weise ferner so aufeinander abgestimmt dimensioniert sein, daß im Ergebnis, daß daß Formteil und Spulenträger, wie aus Fig. 7 bzw. 9 ersichtlich, in Einbaulage einander flächig kontaktieren.

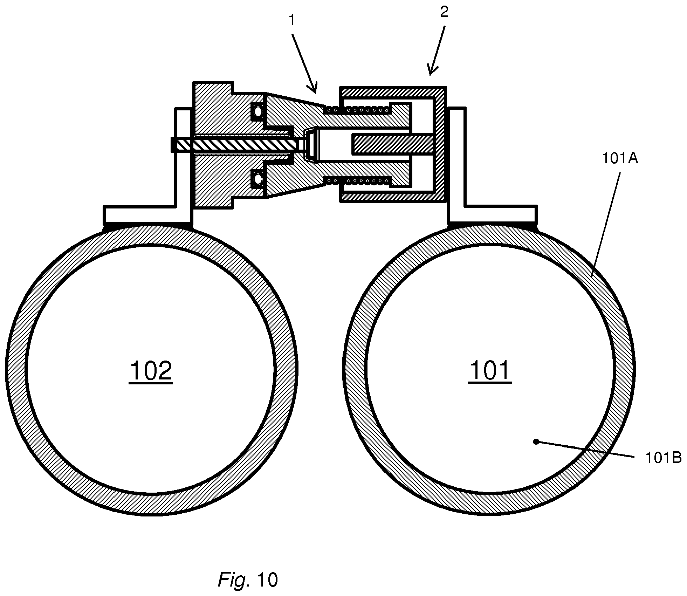

Wie bereits erwähnt ist die erfindungsgemäße Spule im besonderen auch dafür vorgesehen, als Bestandteil eines Meßwandler vom Vibrationstyp, beispielsweise nämlich eines Schwingungserregers oder eines Schwingungssensors, bzw. eines mittels eines solchen Meßwandlers gebildeten vibronischen Meßgeräts, beispielsweise einem Coriolis-Massendurchfluß-Meßgerät, einem Dichte-Meßgerät oder einem Viskositäts-Meßgerät zu dienen. Ein solcher Meßwandler weist, wie in Fig. 10 schematisch dargestellt wenigstens ein Meßrohr 101 mit einem von einer Rohrwand 101A umgebenen Lumen 101B. Das wenigstens eine - beispielsweise zumindest abschnittsweise gerade und/oder zumindest abschnittsweise gekrümmte - Meßrohr ist im besondern dafür eingerichtet, in dessen Lumen 101B ein fließfähiges bzw. zumindest zeitweise strömendes Medium, beispielsweise ein Gas oder ein Flüssigkeit, zu führen und währenddessen vibrieren gelassen zu werden, beispielsweise um das wenigstens eine Meßrohr mechanische Schwingungen um eine ihm zugehörige statische Ruhelage ausführen zu lassen, die geeignet sind, im strömenden Medium von einer Massendurchflußrate, m, abhängige Corioliskräfte zu induzieren, und/oder die geeignet sind, im strömenden Medium von einer Viskosität, η, nämlichen Mediums abhängige Reibungskräfte zu induzieren, und/oder die geeignet sind, im strömenden Medium von einer Dichte, p, nämlichen Mediums abhängige Trägheitskräfte zu induzieren. Der Meßwandler weist ferner einen mit dem wenigstens einen Meßrohr 101 verbundenen- hier nämlich außen an dessen, beispielsweise aus einem Edelstahl, Titan, Tantal, Zirkonium oder einer Nickelbasislegierung bestehenden, Rohrwand 101A fixierten - Permanentmagneten 2 auf. Die Spule 2 ist wiederum so plaziert, daß sie von einem Magnetfeld des Permanentmagneten durchflutet ist. Beispielsweise kann die Spule 2, wie in Fig. 10 angedeutet, an einem, ggf. auch zum Meßrohr 101 baugleichen, weiteren Meßrohr oder aber auch - wie bei Meßwandlern vom Vibrationstyp mit einem einzigen Meßrohr durchaus üblich - an einem ggf. vorhandenen, betriebsgemäß nicht von einem zu messendem durchströmten Medium Gegenschwinger befestigt sein.

## Patentansprüche

1. Spule (1), insb. für einen Meßwandler vom Vibrationstyp, umfassend:
- einen Grundkörper (11) mit einer sich von einem durch eine erste Stirnfläche gebildeten ersten Ende (11+) des Grundkörpers bis zu einem zu nämlichem ersten Ende distalen, durch eine zweite Stirnfläche gebildeten zweiten Ende (11#) des Grundkörpers erstreckenden
Durchgangsöffnung (11A; 11A');
- einen Spulenträger (12) mit einer sich von einem durch eine erste Stirnfläche gebildeten ersten Ende (12+) des Spulenträgers bis zu einem zu nämlichem ersten Ende distalen, durch eine zweite Stirnfläche gebildeten zweiten Ende (12#) des Spulenträgers erstreckenden Durchgangsöffnung (12A), wobei der Spulenträger (12) relativ zum Grundkörper (11) so angeordnet ist,
-- daß die zweite Stirnfläche des Spulenträgers dem Grundkörper zugewandt und zwischen der zweiten Stirnfläche des Spulenträgers und der ersten Stirnfläche des Grundkörpers ein Zwischenraum (20) ausgebildet ist,
-- und daß die Durchgangsöffnung (12A) des Spulenträgers mit der Durchgangsöffnung (11A) des Grundkörpers fluchtet;
- eine sowohl von der Durchgangsöffnung des Spulenträgers als auch der Durchgangsöffnung des Grundkörpers aufgenommene Schraube (13) zum mechanischen Verbinden von Spulenträger und Grundkörper;
- einen um den Spulenträger gewickelten Spulendraht (14) aus einem elektrisch leitfähigen Material;
- sowie wenigstens zwei, jeweils anteilig in dem zwischen Spulenträger und Grundkörper gebildeten Zwischenraum plazierte Anschlußleitungen (111, 112), von denen
-- eine erste Anschlußleitung (111) wenigstes eine mit einem ersten Ende (14+) des Spulendrahts (14) elektrisch leitend verbundene Ader (111A) aus elektrisch leitfähigem Material, und
-- eine zweite Anschlußleitung (112) wenigstes eine mit einem zweiten Ende (14#) des Spulendrahts (14) elektrisch leitend verbundene Ader (112A) aus elektrisch leitfähigem Material aufweisen; **dadurch gekennzeichnet, dass**
- die Anschlussleitungen (111, 112) mittels eines innerhalb des Zwischenraums (20) bewirkten Kraftschluss fixiert sind,
- wobei der Grundkörper, der Spulenträger zusammen mit den Anschlußleitungen dafür eingerichtet sind, im Zwischenraum den die Anschlußleitungen fixierenden Kraftschluß zu bewirken.

2. Spule gemäß einem der vorherigen Ansprüche, wobei die erste Stirnfläche des Grundkörpers (11) wenigstens eine Ausnehmung (11B) zur Aufnahme wenigstens einer der wenigstens zwei Anschlußleitungen aufweist.

3. Spule Anspruch 2,
- wobei die erste Stirnfläche des Grundkörpers (11)
-- eine erste Ausnehmung (12B) zur Aufnahme der ersten Anschlußleitung (111)
-- sowie eine zweite Ausnehmung (12C) zur Aufnahme der zweiten Anschlußleitung (112) aufweist; und
- wobei die erste Anschlußleitung (111) anteilig von der ersten Ausnehmung (12B) und die zweite Anschlußleitung (112) anteilig von der zweiten Ausnehmung (12C) aufgenommen sind.

4. Spule gemäß einem der vorherigen Ansprüche, wobei die zweite Stirnfläche des Spulenträgers (12) wenigstens eine Ausnehmung (12B) zur Aufnahme wenigstens einer der wenigstens zwei Anschlußleitungen aufweist.

5. Spule gemäß einem der vorherigen Ansprüche, wobei Spulenträger und Grundkörper so angeordnet sind, daß die erste Stirnfläche des Grundkörpers und die zweite Stirnfläche des Spulenkörpers einander zugewandt sind.

6. Spule gemäß einem der Ansprüche 1 bis 4, weiters umfassend:
- ein Formteil (15) mit einer sich von einem durch eine erste Stirnfläche gebildeten ersten Ende (15+) des Formteils bis zu einem zu nämlichem ersten Ende distalen, durch eine zweite Stirnfläche gebildeten zweiten Ende (15#) des Formteils erstreckenden Durchgangsöffnung (15A),
-- wobei das Formteil im zwischen Spulenträger und Grundkörper gebildeten Zwischenraum (20) plaziert und relativ zu Spulenträger und Grundkörper so angeordnet ist, daß die Durchgangsöffnung (15A) des Formteils sowohl mit der Durchgangsöffnung des Grundkörpers als auch mit der Durchgangsöffnung des Spulenträgers fluchtet;
-- und wobei die Schraube (13) anteilig auch von der Durchgangsöffnung (15A) des Formteils (15) aufgenommen ist.

7. Spule gemäß Anspruch 6, wobei das Formteil relativ zu Spulenträger und Grundkörper so angeordnet ist, daß die erste Stirnfläche des Formteils dem Spulenträger und die zweite Stirnfläche des Formteils dem Grundkörper zugewandt sind.

8. Spule gemäß einem der Ansprüche 6 bis 7, wobei die erste Stirnfläche des Formteils wenigstens eine Ausnehmung (15B) zur Aufnahme wenigstens einer der wenigstens zwei Anschlußleitungen aufweist.

9. Spule gemäß Anspruch 6,
- wobei die erste Stirnfläche des Formteils
-- eine erste Ausnehmung (15B) zur Aufnahme der ersten Anschlußleitung (111)
-- sowie eine zweite Ausnehmung (15C) zur Aufnahme der zweiten Anschlußleitung (112) aufweist; und
- wobei die erste Anschlußleitung anteilig von der ersten Ausnehmung und die zweite Anschlußleitung anteilig von der zweiten Ausnehmung aufgenommen sind.

10. Spule gemäß einem der vorherigen Ansprüche,
- wobei der Spulenträger (12)
-- ein Wicklungssegment (12B),
-- ein an ein erstes Ende des Wicklungssegments grenzendes erstes Randsegment (12C)
-- sowie ein an ein zum ersten Ende distales zweites Ende des Wicklungssegments grenzendes zweiten Randsegment (12D) aufweist, und
- wobei der Spulendraht (14) nämlich auf das Wicklungssegment (12B) gewickelt ist.

11. Spule gemäß Anspruch 10,
- wobei die Durchgangsöffnung (12A) des Spulenträgers (12) innerhalb des zweiten Randsegments (12D) eine Querschnittsänderung aufweist; und/oder
- wobei die Schraube (13) einen Schraubenkopf (13A) aufweist, und so innerhalb des Spulenträgers (12) plaziert ist, daß der Schraubenkopf (13A) innerhalb des zweiten Randsegments (12D) positioniert ist.

12. Spule gemäß einem der vorherigen Ansprüche, wobei mittels der Schraube (13) eine Schraubverbindung gebildet ist, die eine axiale, nämlich in Richtung einer gedachten Längsachse der Schraube wirkende Spannkraft auf den Spulenträger überträgt.

13. Spule gemäß einem der vorherigen Ansprüche, wobei der Grundkörper, der Spulenträger zusammen mit den Anschlußleitungen dafür eingerichtet sind, den die Anschlußleitungen fixierenden Kraftschluß im Zwischenraum mit einer von einer mittels der Schraube auf den Spulenträger übertragenen Spannkraft abhängigen Haftreibkraft zu bewirken.

14. Spule gemäß Anspruch 12 und 13, wobei der Kraftschluß eine von der Spannkraft abhängige Haftreibkraft aufweist.

15. Spule gemäß einem der vorherigen Ansprüche,
- wobei der Spulendraht aus Kupfer oder einer Kupfer-Legierung besteht; und/oder
- wobei die Ader der ersten Anschlußleitung aus Silber oder einer Silberlegierung besteht; und/oder
- wobei die Ader der zweiten Anschlußleitung aus dem gleichen Material wie die Ader der ersten Anschlußleitung besteht; und/oder
- wobei die Ader der ersten Anschlußleitung zumindest teilweise von einer textilen Isolation umhüllt ist; und/oder
- wobei die Ader der zweiten Anschlußleitung zumindest teilweise von der gleichen Isolation wie die Ader der ersten Anschlußleitung_umhüllt ist; und/oder
- wobei der Spulenträger aus Kunststoff, besteht; und/oder
- wobei die Ader der ersten Anschlußleitung stoffschlüssig mit dem ersten Ende des Spulendrahts verbunden ist; und/oder
- wobei die Ader der zweiten Anschlußleitung stoffschlüssig mit dem zweiten Ende des Spulendrahts verbunden ist.

16. Meßwandler vom Vibrationstyp, umfassend:
- wenigstens ein Meßrohr (101), das ein von einer Rohrwand umgebenes Lumen aufweist und dafür eingerichtet ist, in einem Lumen ein fließfähiges Medium zu führen und währenddessen vibrieren gelassen zu werden;
- einen mit dem wenigstens einen Meßrohr verbundenen Permanentmagneten;
- sowie eine Spule gemäß einem der vorherigen Ansprüche, wobei nämliche Spule von einem Magnetfeld des Permanentmagneten durchflutet ist.

## Claims

1. Coil (1), particularly for a vibronic-type transducer, comprising:
- a meter body (11) with a lead-through opening (11A ; 11A') extending from a first end (11 +) of the meter body, formed by a first front surface, to a second end (11#) formed by a second front surface of the meter body, said second end being distal in relation to the first end;
- a coil carrier (12) with a lead-through opening (12A) extending from a first end (12+) of the coil carrier, formed by a first front surface, to a second end (12#), formed by a second front surface of the coil carrier, said second end being distal in relation to the first end,
wherein the coil carrier (12) is arranged in relation to the meter body (11) in such a way that
-- the second front surface of the coil carrier is oriented towards the meter body and that an intermediate space (20) is formed between the second front surface of the coil carrier and the first front surface of the meter body,
-- and that the lead-through opening (12A) of the coil carrier is aligned with the lead-through opening (11A) of the meter body;
- a screw (13) accommodated by both the lead-through opening of the coil carrier and the lead-through opening of the meter body, said screw being intended for the mechanical connection of the coil carrier and the meter body;
- a coil wire (14) wrapped around the coil carrier made from an electrically conductive material;
- as well as at least two connecting cables (111, 112), each being partially placed in the intermediate space formed between the coil carrier and the meter body, wherein of said cables
-- a first connecting cable (111) has at least a core (111A) connected in an electrically conductive manner to a first end (14+) of the coil wire (14), said core being made from an electrically conductive material, and
-- a second connecting cable (112) has least a core (112A) connected in an electrically conductive manner to a second end (14#) of the coil wire (14), said core being made from an electrically conductive material.

2. Coil as claimed in one of the previous claims, wherein the first front surface of the meter body (11) comprises at least a recess (11B) designed to accommodate at least one of the at least two connecting cables.

3. Coil as claimed in Claim 2,
- wherein the first front surface of the meter body (11)
-- comprises a first recess (12B) designed to accommodate the first connecting cable (111)
-- as well as a second recess (12C) designed to accommodate the second connecting cable (112); and
- wherein the first connecting cable (111) is partially accommodated by the first recess (12B) and the second connecting cable (112) is partially accommodated by the second recess (12C).

4. Coil as claimed in one of the previous claims, wherein the second front surface of the coil carrier (12) comprises at least one recess (12B) designed to accommodate at least one of the at least two connecting cables.

5. Coil as claimed in one of the previous claims, wherein the coil carrier and the meter body are arranged in such a way that the first front surface of the meter body and the second front surface of the coil body face one another.

6. Coil as claimed in one of the Claims 1 to 4, further comprising:
- a molded part (15) with a lead-through opening (15A) extending from a first end (15+) of the molded part, formed by a first front surface, as far as a second end (15#) formed by a second front surface of the molded part, said second end being distal in relation to the first end,
-- wherein the molded part is placed in the intermediate space (20) formed between the coil carrier and the meter body and is arranged in relation to the coil carrier and meter body in such a way that the lead-through opening (15A) of the molded part is aligned with both the lead-through opening of the meter body and with the lead-through opening of the coil carrier;
-- and wherein the screw (13) is also partially accommodated by the lead-through opening (15A) of the molded part (15).

7. Coil as claimed in Claim 6, wherein the molded part is arranged in relation to the coil carrier and the meter body in such a way that the first front surface of the molded part is oriented towards the coil carrier and the second front surface of the molded part is oriented towards the meter body.

8. Coil as claimed in one of the Claims 6 to 7, wherein the first front surface of the molded part comprises at least one recess (15B) designed to accommodate at least one of the at least two connecting cables.

9. Coil as claimed in Claim 6,
- wherein the first front surface of the molded part features
-- a first recess (15B) designed to accommodate the first connecting cable (111)
-- as well as a second recess (15C) designed to accommodate the second connecting cable (112); and
- wherein the first connecting cable is partially accommodated by the first recess and the second connecting cable is partially accommodated by the second recess.

10. Coil as claimed in one of the previous claims,
- wherein the coil carrier (12) comprises
-- a winding segment (12B)
-- a first border segment (12C) bordering on a first end of the winding segment
-- as well as a second border segment (12D) bordering on a second end of the winding segment, said second end being distal in relation to the first end, and
- wherein the coil wire (14) is wound around the winding segment (12B).

11. Coil as claimed in Claim 10,
- wherein the lead-through opening (12A) of the coil carrier (12) has a change in the cross-section within the second border segment (12D); and/or
- wherein the screw (13) comprises a screw head (13A) and is placed inside the coil carrier in such a way that the screw head (13A) is positioned within the second border segment (12D).

12. Coil as claimed in one of the previous claims, wherein a screw connection is formed by the screw (13), said connection transferring a clamping force onto the coil carrier, said force acting in the direction of an imaginary longitudinal axis of the screw.

13. Coil as claimed in one of the previous claims, wherein the meter body and the coil carrier, together with the connecting cables, are designed to generate the force locking connection that fixes the connecting cables in place in the intermediate space with a static friction force that depends on a clamping force transferred to the coil carrier by means of the screw.

14. Coil as claimed in Claims 12 and 13, wherein the force locking connection features a static friction force that depends on a clamping force.

15. Coil as claimed in one of the previous claims,
- wherein the coil wire is made from copper or a copper alloy; and/or
- wherein the core of the first connecting cable is made from silver or a silver alloy; and/or
- wherein the core of the second connecting cable is made from the same material as the core of the first connecting cable; and/or
- wherein the core of the first connecting cable is at least partially surrounded by a textile insulation; and/or
- wherein the core of the second connecting cable is at least partially surrounded by the same insulation as the core of the first connecting cable; and/or
- wherein the coil carrier is made from a synthetic material; and/or
- wherein the core of the first connecting cable is connected to the first end of the coil wire by means of substance-to-substance bonding; and/or
- wherein the core of the second connecting cable is connected to the second end of the coil wire by means of substance-to-substance bonding.

16. Vibronic-type transducer, comprising:
- at least a measuring tube (101), which has an interior channel that is surrounded by a tube wall and is designed to conduct flowing medium in an interior channel and be made to vibrate during this time;
- a permanent magnet connected to the at least one measuring tube;
- as well as a coil as claimed in one of the previous claims, wherein a magnetic field of the permanent magnet passes through said coil.

## Revendications

1. Bobine (1), notamment destinée à un transducteur du type à vibrations, comprenant :
- un corps de base (11) avec une ouverture de passage (11A ; 11A') s'étendant à partir d'une première extrémité (11+) du corps de base, formée par une première surface frontale, jusqu'à une deuxième extrémité (11#) formée par une deuxième surface frontale du corps de base, laquelle deuxième extrémité est distale par rapport à la première extrémité ;
- un porte-bobine (12) avec une ouverture de passage (12A) s'étendant à partir d'une première extrémité (12+) du porte-bobine, formée par une première surface frontale, jusqu'à une deuxième extrémité (12#) formée par une deuxième surface frontale du porte-bobine, laquelle deuxième extrémité est distale par rapport à la première extrémité,
le porte-bobine (12) étant disposé, par rapport au corps de base (11), de telle sorte
-- que la deuxième surface frontale du porte-bobine soit orientée vers le corps de base et qu'un espace intermédiaire (20) soit formé entre la deuxième surface frontale du porte-bobine et la première surface frontale du corps de base,
-- et que l'ouverture de passage (12A) du porte-bobine soit alignée avec l'ouverture de passage (11A) du corps de base ;
- une vis (13) contenue à la fois dans l'ouverture de passage du porte-bobine et dans l'ouverture de passage du corps de base, laquelle vis est destinée à la liaison mécanique du porte-bobine et du corps de base ;
- un fil de bobine (14) enroulé autour du porte-bobine, lequel fil est constitué d'un matériau électriquement conducteur ;
- ainsi qu'au moins deux câbles de raccordement (111, 112), tous deux placés partiellement dans l'espace intermédiaire formé entre le porte-bobine et le corps de base, câbles parmi lesquels
-- un premier câble de raccordement (111) présente au moins un conducteur (111A) relié de manière électroconductrice avec une première extrémité (14+) du fil de bobine (14), lequel conducteur est constitué d'un matériau électroconducteur, et
-- un deuxième câble de raccordement (112) présente au moins un conducteur (112A) relié de manière électroconductrice avec une deuxième extrémité (14+) du fil de bobine (14), lequel conducteur est constitué d'un matériau électroconducteur.

2. Bobine selon l'une des revendications précédentes, pour laquelle la première face frontale du corps de base (11) comprend au moins une cavité (11B) destinée à recevoir au moins l'un des au moins deux câbles de raccordement.

3. Bobine selon la revendication 2,
- pour laquelle la première face frontale du corps de base (11)
-- comprend une première cavité (12B) destinée à recevoir le premier câble de raccordement (111)
-- ainsi qu'une deuxième cavité (12C) destinée à recevoir le deuxième câble de raccordement (112) ; et
- pour laquelle le premier câble de raccordement (111) est contenu partiellement dans la première cavité (12B) et le deuxième câble de raccordement (112) partiellement dans la deuxième cavité (12C).

4. Bobine selon l'une des revendications précédentes, pour laquelle la deuxième surface frontale du porte-bobine (12) comprend au moins une cavité (12B) destinée à recevoir au moins l'une des au moins deux câbles de raccordement.

5. Bobine selon l'une des revendications précédentes, pour laquelle le porte-bobine et le corps de base sont disposés de telle sorte que la première surface frontale et la deuxième surface frontale du corps de bobine font face l'une à l'autre.

6. Bobine selon l'une des revendications 1 à 4, comprenant en outre :
- une pièce préformée (15) avec une ouverture de passage (15A) s'étendant à partir d'une première extrémité (15+) de la pièce préformée, formée par une première surface frontale, jusqu'à une deuxième extrémité (15#) formée par une deuxième surface frontale de la pièce préformée, laquelle deuxième extrémité est distale par rapport à la première extrémité,
-- la pièce préformée étant placée dans l'espace intermédiaire (20) formé par le porte-bobine et le corps de base et disposée par rapport au porte-bobine et au corps de base de telle sorte que l'ouverture de passage (15A) de la pièce préformée soit alignée à la fois avec l'ouverture de passage du corps de base et avec l'ouverture de passage du porte-bobine ;
-- et la vis (13) étant également contenue partiellement dans l'ouverture de passage (15A) de la pièce préformée (15).

7. Bobine selon la revendication 6, pour laquelle la pièce préformée est disposée par rapport au porte-bobine et au corps de base de telle sorte que la première surface frontale de la pièce préformée soit orientée vers le porte bobine et la deuxième surface frontale de la pièce préformée vers le corps de base.

8. Bobine selon l'une des revendications 6 à 7, pour laquelle la première surface frontale de la pièce préformée comprend au moins une cavité (15B) destinée à recevoir au moins l'un des au moins deux câbles de raccordement.

9. Bobine selon la revendication 6,
- pour laquelle la première surface frontale de la pièce préformée comprend
-- une première cavité (15B) destinée à recevoir le premier câble de raccordement (111)
-- ainsi qu'une deuxième cavité (15C) destinée à recevoir le deuxième câble de raccordement (112) ; et
- pour laquelle le premier câble de raccordement est contenu partiellement dans la première cavité et le deuxième câble de raccordement partiellement dans la deuxième cavité.

10. Bobine selon l'une des revendications précédentes,
- pour laquelle le porte-bobine (12) comprend
-- un segment d'enroulement (12B)
-- un premier segment de bord (12C) jouxtant une première extrémité du segment d'enroulement
-- ainsi qu'un deuxième segment de bord (12D) jouxtant une deuxième extrémité du segment d'enroulement, laquelle deuxième extrémité est distale par rapport à la première extrémité, et
- le fil de bobine (14) étant enroulé sur le segment d'enroulement (12B).

11. Bobine selon la revendication 10,
- pour laquelle l'ouverture de passage (12A) du porte-bobine (12) présente, à l'intérieur du deuxième segment de bord (12D), un changement de section ; et/ou
- pour laquelle la vis (13) comprend une tête de vis (13A) et est placée à l'intérieur du porte-bobine, de telle sorte que la tête de vis (13A) soit positionnée à l'intérieur du deuxième segment de bord (12D).

12. Bobine selon l'une des revendications précédentes, pour laquelle est formé, au moyen de la vis (13), un assemblage vissé qui transmet au porte-bobine une force de serrage axiale, notamment agissant dans la direction d'un axe longitudinal imaginaire de la vis.

13. Bobine selon l'une des revendications précédentes, pour laquelle le corps de base et le porte-bobine sont, ensemble avec les câbles de raccordement, conçus à générer la liaison cinétique fixant les câbles de raccordement dans l'espace intermédiaire avec une force d'adhérence dépendant de la force de serrage transmise au porte-bobine au moyen de la vis.

14. Bobine selon les revendications 12 et 13, pour laquelle la liaison cinétique présente une force d'adhérence dépendant de la force de serrage.

15. Bobine selon l'une des revendications précédentes,
- pour laquelle le fil de bobine est constitué de cuivre ou d'un alliage de cuivre ; et/ou
- pour laquelle le conducteur du premier câble de raccordement est constitué d'argent ou d'un alliage d'argent ; et/ou
- pour laquelle le conducteur du deuxième câble de raccordement est constitué du même matériau que celui utilisé pour le conducteur du premier câble de raccordement ; et/ou
- pour laquelle le conducteur du premier câble de raccordement est entouré au moins partiellement par une isolation textile ; et/ou
- pour laquelle le conducteur du deuxième câble de raccordement est entouré au moins partiellement par la même isolation que celle utilisée pour le conducteur du premier câble de raccordement ; et/ou
- pour laquelle le porte-bobine est constitué d'une matière synthétique ; et/ou
- pour laquelle le conducteur du premier câble de raccordement est relié par une liaison de matière avec la première extrémité du fil de bobine ; et/ou
- pour laquelle le conducteur du deuxième câble de raccordement est relié par une liaison de matière avec la deuxième extrémité du fil de bobine.

16. Transducteur du type à vibrations, comprenant :
- au moins un tube de mesure (101), lequel présente un canal intérieur entouré par une paroi de tube, et lequel tube est conçu pour guider dans un canal intérieur un produit apte à s'écouler et pour être mis en vibrations pendant l'écoulement du produit ;
- un aimant permanent relié avec l'au moins un tube de mesure ;
- ainsi qu'une bobine selon l'une des revendications précédentes, la dite bobine étant traversée par un champ magnétique de l'aimant permanent.
